# EUROPÄISCHE PATENTANMELDUNG

(11) **EP 0 735 649 A1**
(43) Veröffentlichungstag der Anmeldung: **02.10.1996**
(21) Anmeldenummer: 96104170.4
(22) Anmeldetag: 15.03.1996
(51) Int. Cl.: H02K 7/102

(54) **Elektrische Maschine mit Bremssystem**

(30) Priorität: 31.03.1995 DE 19512172
(71) Anmelder: SIEMENS AKTIENGESELLSCHAFT, 80333 München (DE)
(72) Erfinder: Werbinek, Thomas, Dipl.-Ing. (FH), 97529 Sulzheim (DE); Wagner, Herbert, Dipl.-Ing. (FH), 97616 Bad Neustadt (DE)

(57) **Zusammenfassung**

Die Erfindung betrifft eine elektrische Maschine, mit mindestens einem auf einer Stirnseite der Maschine angeordnetem Zusatzgerät. Der Anbau eines Zusatzgerätes gleicher Ausführung an verschiedene Maschinentypen wird dadurch ermöglicht, daß auf der betreffenden Stirnseite der Maschine eine das Zusatzgerät (5) tragende Zwischenscheibe (7) an dem Lagerschild (1) angebaut ist.

## Beschreibung

Die Erfindung bezieht sich auf eine elektrische Maschine, mit mindestens einem auf einer Stirnseite der Maschine angeordnetem Zusatzgerät.

Derartige Zusatzgeräte sind häufig elektromagnetisch betätigte Bremsen, die zum schnellen Stillsetzen der Maschine beim Abschalten derselben dienen oder auch die Maschine im Ruhezustand festbremsen. Der Anbau derartiger Zusatzgeräte erfordert stets eine entsprechende Anpassung zwischen dem Zusatzgerät und den verschiedenen Maschinentypen.

Der Erfindung liegt die Aufgabe zugrunde, eine elektrische Maschine der eingangs beschriebenen Art so weiterzubilden, daß ein Zusatzgerät gleicher Ausführung an unterschiedlich ausgebildete, elektrische Maschinen angebaut werden kann.

Die Lösung der gestellten Aufgabe gelingt nach der Erfindung dadurch, daß auf der betreffenden Stirnseite der Maschine eine das Zusatzgerät tragende Zwischenscheibe an dem Lagerschild angebaut ist. Mittels der Zwischenscheibe, die einen Adapter darstellt, kann das Zusatzgerät an unterschiedlichen Maschinentypen angebaut werden, ohne daß an der Maschine oder dem Zusatzgerät besondere Anpassungsmaßnahmen durchgeführt werden müssen.

Eine weitere Möglichkeit zur Einsparung von Bearbeitungskosten ist dadurch gegeben, daß die Zwischenscheibe an unbearbeiteten Anlageflächen des Lagerschildes befestigt ist.

Trotz des Anbaus der Zwischenscheibe an unbearbeiteten Anlageflächen des Lagerschildes ergeben sich hinsichtlich einer an der Zwischenscheibe angeordneten, elektromagnetisch betätigbaren Bremse keine Ausrichtprobleme, wenn deren Bremsscheibe mittels paßfederartiger Elemente axial beweglich und drehfest mit der Maschinenwelle verbunden ist. Eine solche paßfederartige Verbindung, bei der radial vorstehende Leisten des einen Teils in radiale Vertiefungen des anderen Teiles eingreifen, weist von Natur aus ein entsprechendes Spiel auf, durch das evtl. durch die unbearbeiteten Anlageflächen verursachte Schiefstellungen zwischen den Bremsflächen und der Bremsscheibe der Bremse ausgeglichen werden.

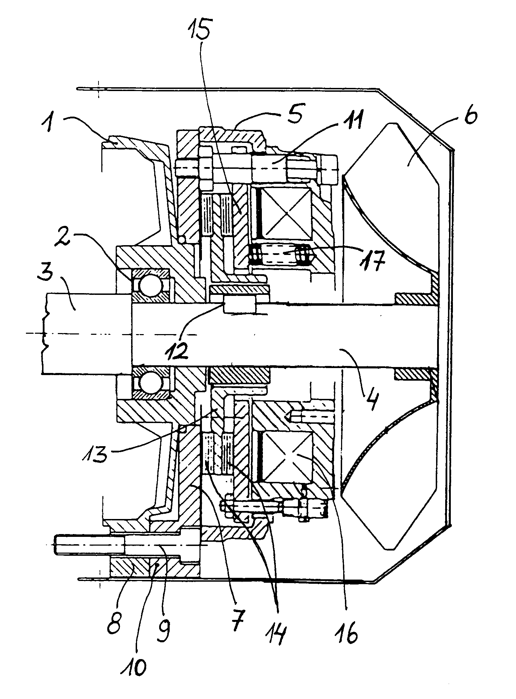

Anhand eines in der Zeichnung dargestellten Ausführungsbeispieles wird die Erfindung nachfolgend näher beschrieben.

Mit 1 ist das B-seitige Lagerschild einer elektrischen Maschine bezeichnet, in dem mittels eines Wälzlagers 2 die helle 3 der elektrischen Maschine gelagert ist. An dem über das Lagerschild 1 hinausragenden freien Ende 4 der Welle 3 ist benachbart zum Lagerschild 1 eine elektromagnetisch betätigbare Bremse 5 und daran anschließend ein Lüfterrad 6 angeordnet.

Zwischen dem Lagerschild 1 und der Bremse 5 ist eine Zwischenscheibe 7 eingefügt. Diese Zwischenscheibe 7 ist über den Umfang gleichmäßig verteilt an mehreren Befestigungsstellen 8 mittels Schrauben 9 mit dem Lagerschild 1 verbunden. Die Anlagefläche der Befestigungsstellen 8, an denen die Zwischenscheibe 7 mittels entsprechender Axialvorsprünge 10 anliegt, können unbearbeitet sein.

Die Bremse 5 ist mittels Halteschrauben 11 an der Zwischenscheibe 7 befestigt. Die Verwendung der Zwischenscheibe 7 ermöglicht den Anbau von gleich ausgebildeten Bremsen 5 an verschiedenen Maschinentypen, ohne daß an dem Bremsengehäuse entsprechende konstruktive Anpassungsmaßnahmen vorgenommen werden müssen.

Die Bremse 5 weist eine über eine paßfederartige Verbindung 12 mit der Welle 3 der Maschine axial beweglich, jedoch drehfest gekoppelte Bremsscheibe 13 auf. Im Bereich ihres Außenumfanges sind an der Bremsscheibe 13 beidseitig Bremsbeläge 14 vorgesehen, die mit an der Zwischenscheibe 7 und einer axial beweglichen Ankerscheibe 15 vorgesehenen Bremsflächen zusammenwirken. Die aus ferromagnetischem Material bestehende Ankerscheibe 15 ist axial beweglich angeordnet und wird bei Erregung des Magnetsystems 16 der Bremse 5 angezogen, so daß der axiale Abstand zwischen der Zwischenscheibe 7 und der Ankerscheibe 15 soweit vergrößert ist, daß sich die Bremsscheibe 13 frei zwischen diesen Teilen drehen kann. Beim Abschalten des Magnetsystems 16 wird die Ankerscheibe 15 durch Federn 17 gegen die Zwischenscheibe 7 hin verschoben und somit werden die Bremsbeläge 14 zwischen der Zwischenscheibe 7 und der Ankerscheibe 15 festgeklemmt.

## Patentansprüche

1. Elektrische Maschine, mit mindestens einem auf einer Stirnseite der Maschine angeordneten Zusatzgerät (5),
**dadurch gekennzeichnet,**
daß auf der betreffenden Stirnseite der Maschine eine das Zusatzgerät (5) tragende Zwischenscheibe (7) an dem Lagerschild (1) angebaut ist.

2. Elektrische Maschine nach Anspruch 1,
**dadurch gekennzeichnet,**
daß die Zwischenscheibe (7) an eine unbearbeitete Anlagefläche aufweisenden Befestigungsstellen (8) des Lagerschildes (1) befestigt ist.

3. Elektrische Maschine nach Anspruch 2,
**dadurch gekennzeichnet,**
daß an der Zwischenscheibe (7) eine elektromagnetisch betätigbare Bremse (5) angeordnet ist, deren Bremsscheibe (13) mittels paßfederartiger Elemente (12) axial beweglich und drehfest mit der Maschinenwelle (3) verbunden ist.
